# EUROPÄISCHE PATENTSCHRIFT

(11) **EP 1 331 079 B1**
(45) Veröffentlichungstag und Bekanntmachung des Hinweises auf die Patenterteilung: **20.09.2006**
(21) Anmeldenummer: 03000469.1
(22) Anmeldetag: 11.01.2003
(51) Int. Cl.: B29C 45/67, B29C 45/68

(54) **Zweiplatten-Schliesssystem einer Spritzgiessmaschine**
Two plate closing system in an injection moulding machine
Unité de fermeture d'une machine à mouler par injection

(30) Priorität: 23.01.2002 DE 10202374
(43) Veröffentlichungstag der Anmeldung: 30.07.2003
(73) Patentinhaber: Krauss-Maffei Kunststofftechnik GmbH, 80997 München (DE)
(72) Erfinder: Wohlrab, Walter, 91781 Weissenburg (DE)
(74) Vertreter: Zollner, Richard

(56) Entgegenhaltungen:
- DE-A- 4 344 340
- PATENT ABSTRACTS OF JAPAN vol. 2002, no. 11, 6. November 2002 (2002-11-06) -& JP 2002 200660 A (NISSEI PLASTICS IND CO), 16. Juli 2002 (2002-07-16)

## Beschreibung

Die Erfindung bezieht sich auf ein Zweiplatten-Schließystem von der im Oberbegriff des Patentanspruchs 1 angegebenen Art.

Aus der DE 43 44 340 C 2 ist ein Zweiplatten-Schließsystem einer Spritzgießmaschine der angegebenen Art bekannt.

Dem gegenüber liegt der Erfindung die Aufgabe zu Grunde, bei eine Zweiplatten-Schließeinheit einer Spritzgießmaschine zu schaffen, bei der mit nur einem Antriebsmotor sowohl die Öffnungs- und Schließbewegung bewerkstelligt als auch der Schließdruck erzeugt werden und der gewünschte Schließdruck für die Dauer des Spritzvorgangs eingesperrt werden Kann.

Die Lösung dieser Aufgabe erfolgt durch ein Zweiplatten-Schließsystem mit den Merkmalen des Patentanspruchs 1; die weiteren Patentansprüche betreffen vorteilhafte Ausgestaltungen der Erfindung.

Mit dem erfindungsgemäßen Zweiplatten-Schließsystem ergeben sich neben der Tatsache, dass sich das System durch Verwendung von lediglich einem Antriebsmotor für die Durchführung der Stellbewegung (Öffnen, Schließen) und für die Erzeugung des Schließdruckes eignet, die Vorteile, dass die Zweiplatten-Schließeinheit mit geringem Energieaufwand und sehr leise betrieben werden kann. Das Flüssigkeitssystem kann bei integrierter Filterung geschlossen gehalten werden, womit sich hohe Standzeiten der Druckflüssigkeit ergeben. Letztlich erübrigt sich auch eine gesonderte Schmierung für den Spindelantrieb.

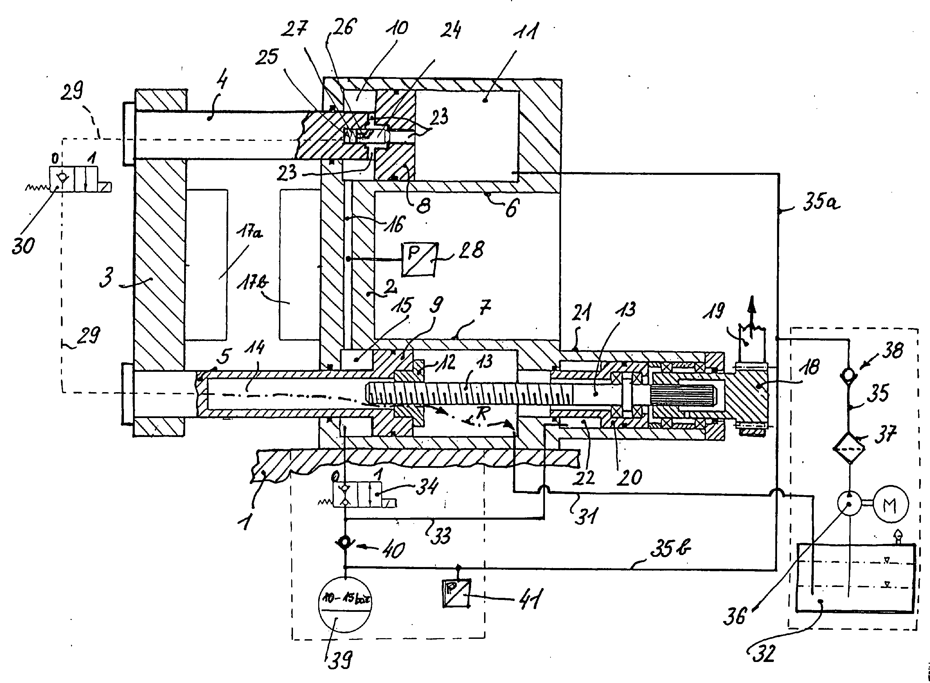

Eine Ausführungsform der Erfindung wird anhand der Zeichnung erläutert, die eine erfindungsgemäße Zweiplatten-Schließeinheit in teilweise weggebrochener Seitendarstellung zeigt.

### 1. Konstruktiver Aufbau

Die Zweiplatten-Schließeinheit umfasst eine auf einem nicht näher dargestellten Maschinenbett 1 befestigte feste Formaufspannplatte 2 und eine bewegliche Formaufspannplatte 3. Die Formaufspannplatten 2 und 3 sind über vier Säulen 4 und 5 miteinander verbunden. Die Säulen 4 und 5 durchsetzen die feste Formaufspannplatte 2 und weisen an ihren Enden in den Schließzylindern 6 und 7 verschieblich geführte Schließdruckkolben 8 und 9 auf. Die Schließdruckkolben 8 der Säulen 4 sind doppelt wirkende Kolben, die die Schließzylinder 6 jeweils in einen Schließdruckraum 10 und in einen Öffnungsdruckraum 11 unterteilen. Die Schließdruckkolben 9 der Säulen 5 weisen jeweils eine Spindelmutter 12 und eine Spindel 13 auf, die in einen Hohlraum 14 in der Säule eintaucht. Die von den Schließdruckkolben 9 abgeteilten Schließdruckräume 15 stehen über die Kanäle mit den Schließdruckräumen 10 in Verbindung. In der Zeichnung ist obenliegend eine Säule 4 mit doppelt wirkenden Schließdruckkolben 8 dargestellt, hinter der (nicht sichtbar) eine Säule 5 mit aus Spindelmutter 12 und Spindel 13 bestehenden Spindelantrieb angeordnet ist. Diese Säule 5 entspricht der in der Zeichnung unten dargestellten Säule, hinter der (nicht sichtbar) eine Säule 4 angeordnet ist, wie sie der dargestellten oberen Säule 4 entspricht. Die vier aus zwei Arten bestehenden Säulen 4 und 5 sind daher jeweils diagonal gegenüberliegend angeordnet.

Die feste und die bewegliche Formaufspannplatte 2 und 3 tragen jeweils Werkzeughälften 17a und 17b, die sich in geöffneten Position befinden.

Die Spindel 13 ist an dem der festen Formaufspannplatte 2 abgewandten Ende im Schließdruckzylinder 7 gelagert und mit einem Antriebsrad 18 gekoppelt, das über einen Zahnriemen 19 von einen Antriebsmotor (nicht dargestellt), der der einzige Antriebsmotor der Zweiplatten-Schließeinheit ist, angetrieben wird. Zwischen dem Antriebsrad 18 und dem der festen Formaufspannplatte 2 abgewandten Ende des Schließdruckzylinders 7 befindet sich ein von der Spindel 13 durchsetzter Stufenkolben 20, in dem die Spindel 13 frei drehbar, jedoch axial fest gelagert ist. Die Kolbeneinheit 20 schließt mit einem an den Schließdruckzylinder 7 anschließenden Zylindergehäuse 21, das auch die Lagerung des Antriebsrades 18 enthält, einen hydraulischen Druckraum 22 ein.

In den beiden doppelt wirkenden Schließdruckkolben 8 ist eine den Schließdruckraum 10 mit dem Öffnungsdruckraum 11 verbindende Strömungspassage 23 angeordnet. In der Strömungspassage 23 befindet sich ein Umspülventil in Form eines kolbenartigen Ventilkörpers 24, der in einer Position (gemäß Zeichnung) unter Wirkung einer Druckfeder 25 die Strömungspassage 23 absperrt und in einer anderen Position den Durchgang durch die Strömungspassage 23 freischaltet. Der Ventilkörpers 24 weist einen Strömungskanal 26 auf, der vom Schließdruckraum 10 zum Ventildruckraum 10 zum Ventilraum 27 führt, in dem die Druckfeder 25 angeordnet ist.

In mindestens einem der die Schließdruckräume 10 und 15 verbindenden Kanäle 16 ist ein Druckaufnehmer 28 angeordnet.

Der Ventilraum 27, in dem der Ventilkörper 24 verschieblich geführt ist, steht über eine Hydraulikleitung 29 und ein Vorsteuerventil 30 mit dem Hohlraum 14 in Verbindung. Das Vorsteuerventil 30 ist in einer Position 0 geschlossen und in einer Position 1 durchgängig geschaltet. Aus dem Hohlraum 14 durch die Spindelmutter 12 und die Spindel 13 durchtretendes Hydrauliköl dient der Schmierung des Spindelantriebes, wobei die Restmengen R (strichpunktierte Linie) über eine Sammelleitung 31 in den Tank 32 gelangen.

Der vom Stufenkolben 20 beaufschlagte Druckraum 22 steht über eine Hydraulikleitung 33 und ein Ventil 34 mit den Schließdruckräumen 10 und 15 in Verbindung. Das Ventil 34 ist einer Position 0 geschlossen und in einer Position 1 durchgängig geschaltet.

Eine Einrichtung zur Sicherstellung des erforderlich Systemdruckes von ca. 10-15 bar besteht aus einer in einer Systemdruckleitung 35 angeordneten Füllpumpe 36 mit den Hydrauliköl aus dem Tank 32 über einen Filter 37 und ein in Richtung zum Tank 32 sperrenden Einwegventil 38 förderbar ist. Die Systemdruckleitung 35 verzweigt sich in die beiden Öffnungsdruckräume 11 führende Leitung 35 a und in eine zu einem Blasenspeicher 39 führende Leitung 35 b. Der Blasenspeicher 39 ist mit der Hydraulikleitung 33 unter Zwischenschaltung eines in Richtung zum Blasenspeicher 39 sperrenden Einwegventils 40 verbunden. Der Systemdruck wird über einen in der Systemdruckleitung 35 b angeordneten Druckaufnehmer 41 erfasst.

### 2. Funktionsbeschreibung

### 2. 1. Schließen der Schließeinheit im Eilgang

Vor dem Einleiten des Schließvorgangs befinden sich die Werkzeughälften 17 a und 17 b in geöffneter Position, wie sie in der Zeichnung dargestellt ist. Im weiteren befindet sich der Stufenkolben 20 in der dargestellten rechten Anschlagsposition. Das Umspülventil (Ventilkörper 24) befindet sich in einer die Strömungspassage 23 durchgängig schaltenden Position. Das Vorsteuerventil 30 befindet sich in einer Schaltposition 1, in der der Ventilraum 27 mit dem Hohlraum 14 in Verbindung steht. Das Ventil 34 befindet sich in einer Schaltposition 0.

Durch Antreiben der Spindel 13 durch den einzigen Antriebsmotor der Schließeinheit in Schließrichtung wird die bewegliche Formaufspannplatte 3 nach rechts in Schließrichtung bewegt, bis die beiden Werkzeughälften 17 a und 17 b aneinander anliegen. In dieser Betriebsphase wird das in den beiden Öffnungsdruckräumen 11 befindliche Hydrauliköl über das offene Umspülventil (Ventilkörper 24) in die beiden Schließdruckräume 10 und 15 geleitet. Die Öffnungsstellung des Umspülventils wird dadurch erreicht, dass der Ventilraum 27 des Ventilkörpers 24 über die Hydraulikleitung 29 und das offen geschaltete Vorsteuerventil 30 drucklos geschaltet ist, und vom Öffnungsdruckraum 11 der vom Blasenspeicher 39 und der Füllpumpe 36 sichergestellte Systemdruck (10 - 15 bar) wirkt.

### 2. 2. Schließdruckaufbau

Hierzu wird das Umspülventil (Ventilkörper) geschlossen, das Vorsteuerventil 30 wird in Position 0 (Schließstellung) und das Ventil 34 wird in Position 1 (Durchgangstellung) gebracht. Durch Weiterdrehen der Spindel 13 im Schließsinn wird aus dem Druckraum 22 Druckflüssigkeit über das Ventil 34 in die Schließräume 10 und 15 geleitet. Der Druckaufnehmer 28, in dem die beiden Schließdruckräume 10 und 15 verbindenden Kanal 16 erfasst den gewünschten Schließdruck, worauf das Ventil 34 geschlossen (Position 0) und der gewünschte Schließdruck für die Dauer des Spritzvorgangs eingesperrt wird. Die unter Schließdruck stehende Hydraulikflüssigkeit in den Schließdruckräumen 10 und 15 wirkt auf die ringförmigen Kolbenflächen der vier Schließdruckkolben 8 und 9, von denen in der Zeichnung jeweils nur die vorderen Kolben dargestellt sind.

### 2. 3. Abbau des Schließdruckes

Zum Abbau des Schließdruckes wird das Ventil 34 in die Schaltpositon 1 gebracht, in der sich der in der Schließdruckphase in den Schließdruckräumen 10 und 15 herrschende Schließdruck entspannen kann. Der Stufenkolben 20 wird durch Drehung der Spindel 13 im Öffnungssinn in seine Ausgangsposition (gemäß Zeichnung) zurückgestellt.

### 2. 4. Öffnen der Schließeinheit im Eilgang

Hierzu werden das Umspülventil (Ventilkörper 24), das Vorsteuerventil 30 und das Ventil 34 in die gleichen Positionen gebracht wie beim Schließen der Schließeinheit im Eilgang. Durch weiteres Drehen die Spindel 13 im Öffnungssinn nach Abbau des Schließdrucks wird die bewegliche Formaufspannplatte 3 nach links in Öffnungsrichtung bewegt, bis der in der Zeichnung dargestellte Öffnungsabstand zwischen den beiden Werkzeughälften 17 a und 17 b erreicht ist. In dieser Betriebsphase wird das in den Schließdruckräumen 10 und 15 befindliche Hydrauliköl über das offene Umspülventil (Ventilkörper 24) in die beiden Öffnungsdruckräume 11 geleitet.

### 3. Systemdruckerzeugung

Der Druckaufnehmer 41 registriert den durch die Steuerflüssigkeit im System verursachten Druckabfall im Blasenspeicher 39. Mit Erreichen des unteren Druckwertes, (z. B. 10 bar), wird durch Zuschaltung der Füllpumpe 36 die Druckflüssigkeit gefiltert (Filter 37) in das Drucksystem eingespeist. Mit Erreichen des oberen Druckwertes, (z. B. 15 bar), am Blasenspeicher 39 wird die Füllpumpe 36 abgeschaltet.

### Bezugszeichenliste

- 1: Maschinenbett
- 2: feste Formaufspannplatte
- 3: bewegliche Formaufspannplatte
- 4: Säule mit doppelt wirkendem Schließdruckkolben 8
- 5: Säule mit Spindel 13
- 6: Schließdruckzylinder für Schließdruckkolben 8
- 7: Schließdruckzylinder für Schließdruckkolben 9 (Spindel)
- 8: Schließdruckkolben doppelt wirkend
- 9: Schließdruckkolben mit Spindel 13
- 10: Schließdruckraum
- 11: Öffnungsdruckraum
- 12: Spindelmutter
- 13: Spindel
- 14: Hohlraum
- 15: Schließdruckraum Schließdruckkolben 9 (Spindel)
- 16: Kanäle
- 17 a, b: Werkzeughälften
- 18: Antriebsrad
- 19: Zahnriemen
- 20: Stufenkolben
- 21: Zylindergehäuse
- 22: Druckraum
- 23: Strömungspassage
- 24: Ventilkörper (Umspülventil)
- 25: Druckfeder
- 26: Strömungskanal
- 27: Ventilraum
- 28: Druckaufnehmer
- 29: Hydraulikleitung
- 30: Vorsteuerventil
- 31: Sammelleitung
- 32: Tank
- 33: Hydraulikleitung
- 34: Ventil
- 35: Systemdruckleitung; 35 a, b Zweigleitungen
- 36: Füllpumpe
- 37: Filter
- 38: Einwegventil
- 39: Blasenspeicher
- 40: Einwegventil
- 41: Druckaufnehmer

## Patentansprüche

1. Zweiplatten-Schließsystem einer Spritzgießmaschine mit einer festen Formaufspannplatte (2) und einer beweglichen Formaufspannplatte (3), in der Säulen (4, 5) befestigt sind, die die feste Formaufspannplatte (2) durchsetzen, die in dieser mit Schließdruckkolben (8, 9) in Schließzylindern (6, 7) verschieblich gelagert sind und jeweils hydraulisch untereinander in Verbindung stehende Schließdruckräume (10, 15) einschließen, wobei ein Teil der Schließdruckkolben doppelt wirkende Kolben (8) sind, die den Zylinderraum jeweils eines Schließzylinders (6) in einen Schließdruckraum (10) und in einen Öffnungsdruckraum (11) unterteilen und in denen jeweils eine den Schließdruckraum (10) mit dem Öffnungsdruckraum (11) verbindende Strömungspassage (23) angeordnet ist, in der ein Umspülventil angeordnet ist, mit dem die Strömungspassage (23) in der Betriebsstellung "Schließdruckerzeugung" verschließbar und in den Betriebsstellungen "Öffnen" und "Schließen" freischaltbar ist, und wobei ein Teil der Schließdruckkolben (9) mit Spindelantrieben (12, 13) gekoppelt sind, deren Spindeln (13) von einem Drehantrieb antreibbar sind und mit hydraulischen Kolben-Zylinderantrieben in Antriebs-Wirkverbindung stehen, mit deren hydraulischem Druckmedium die Schließdruckräume (10, 15) mit Druck beaufschlagbar sind, **dadurch gekennzeichnet, dass** der Druckraum (22) jeder vom Spindelantrieb (12, 13) betätigbaren Kolben-Zylindereinheit (20, 21) über eine absperrbare Leitung (33) direkt mit den Schließdruckräumen (10, 15) verbunden ist, dass das Umspülventil einen kolbenartigen Ventilkörper (24) aufweist, und dass ein mit dem Ventilkörper (24) in Wirkverbindung stehendes Vorsteuerventil (30) vorgesehen ist, mit dem die Öffnungs- und Schließstellung des Ventilkörpers (24) einstellbar ist.

2. Zweiplatten-Schließsystem nach Anspruch 1, **dadurch gekennzeichnet, dass** der Ventilkörper (24) ein in einem zylindrischen Kolbenraum reversierbar gelagertes zylindrisches Bauteil mit zwei kolbenartigen Enden ist, von denen ein Ende bezüglich der Strömungspassage (23) wahlweise in Öffnungs- und Schließstellung schaltbar ist, und das andere Ende im zylindrischen Kolbenraum einen Ventilraum (27) einschließt und von einer Druckfeder (25) beaufschlagt ist, wobei im Ventilkörper (24) ein die Schließdruckräume (10) mit dem zylindrischen Ventilraum (27) verbindender Strömungskanal (26) angeordnet ist, und wobei vom zylindrischen Ventilraum (27) eine Steuerleitung (29) zum Vorsteuerventil (30) abzweigt, das in Sperrstellung (Position 1) oder in druckentlastende Durchgangsstellung (Position 0) schaltbar ist.

3. Zweiplatten-Schließsystem nach Anspruch 1 oder 2, **dadurch gekennzeichnet, dass** zur Systemdruckerzeugung eine Füllpumpe (36) vorgesehen ist, mit der Druckmedium aus einem Tank (32) über einen Filter (37) und ein Einwegventil (38) in eine Systemdruckleitung (35; 35 a, b) einspeisbar ist, die mit den Öffnungsdruckräumen (11), mit einem Blasenspeicher (39) und mit der Hydraulikleitung (33) in Verbindung steht, die von den Druckräumen (22) der spindelbetätigten Kolben-Zylindereinheiten (20, 21) zu den Schließdruckräumen (10, 15) führt.

4. Zweiplatten-Schließsystem nach einem der Ansprüche 1 bis 3, **dadurch gekennzeichnet, dass** vom Vorsteuerventil (30) eine Leitung (29) zu dem Hohlraum (14) führt, aus dem das Druckmedium R nach Durchlauf durch das Gewinde von Spindelmutter (12) und Spindel (13) über eine Rücklaufleitung (31) in den Tank (32) einleitbar ist.

## Claims

1. A two plate closing system in an injection moulding machine comprising a fixed mould clamping plate (2) and a movable mould clamping plate (3) wherein tie bars (4, 5) which pass through the fixed mould clamping plate (2) are affixed, which tie bars are displaceably mounted therein with closing pressure pistons (8, 9) in closing cylinders (6, 7) and each enclose closing pressure chambers (10, 15) which are in hydraulic communication with one another, wherein some of the closing pressure pistons are double-acting pistons (8) which divide the cylinder chamber of respectively one closing cylinder (6) into a closing pressure chamber (10) and into an opening pressure chamber (11) and wherein respectively one flow passage (23) connecting the closing pressure chamber (10) to the opening pressure chamber (11) is located, wherein a re-flushing valve is located which can be used to close the flow passage (23) in the operating position "closing pressure generation" and release it in the operating positions "open" and "close" and wherein some of the closing pressure pistons (9) are coupled to spindle drives (12, 13), whose spindles (13) are driven by a rotary drive and are in drive-operative communication with hydraulic piston cylinder drives, whose hydraulic pressure medium can apply pressure to the closing pressure chambers (10, 15), **characterised in that** the pressure chamber (22) of each piston cylinder unit (20, 21) which can be actuated by the spindle drive (12, 13) is directly connected to the closing pressure chambers (10, 15) by means of a line (33) which can be shut off, the re-flushing valve has a piston-like valve body (24) and that a pre-control valve (30) in operative communication with the valve body (24) is provided whereby the opening and closing position of the valve body (24) can be adjusted.

2. The two-plate closing system according to claim 1, **characterised in that** the valve body (24) is a cylindrical component reversibly mounted in a cylindrical piston chamber having two piston-like ends of which one end can optionally be switched into the opening and closing position relative to the flow passage (23) and the other end encloses a valve chamber (27) in the cylindrical piston chamber and is acted upon by a compression spring (25), wherein a flow channel (26) connecting the closing pressure chambers (10) to the cylindrical valve chamber (27) is disposed in the valve body (24) and wherein a control line (29) branches off from the cylindrical valve chamber (27) to the pre-control valve (29) which can be switched into a blocking position (position 1) or into a pressure-relieving passage position (position 0).

3. The two-plate closing system according to claim 1 or claim 2, **characterised in that** a filling pump (36) is provided for generating the system pressure whereby pressure medium can be supplied from a tank (32) by means of a filter (37) and a one-way valve (38) into a system pressure line (35; 35 a, b) which is in communication with the opening pressure chambers (11), with a bubble store (39) and with the hydraulic line (33), which leads from the pressure chambers (22) of the spindle-actuated piston cylinder units (20, 21) to the closing pressure chambers (10, 15).

4. The two-plate closing system according to any one of claims 1 to 3, **characterised in that** from the pre-control valve (30) a line (29) leads to the cavity (14) from which, after passing through the thread of the spindle nut (12) and the spindle (13), the pressure medium R is fed into the tank (32) by means of a return line (31).

## Revendications

1. Système de fermeture à deux plateaux d'une presse d'injection avec un plateau porte-outillage fixe (2) et un plateau porte-outillage mobile (3) dans lequel sont fixés des montants (4, 5) qui traversent le plateau porte-outillage fixe (2), qui sont logés de façon mobile dans celui-ci avec des pistons plongeurs de fermeture (8, 9) dans les cylindres de fermeture (6, 7) et renferment chacun des chambres de pression (10, 15) en liaison hydraulique réciproque, une partie des pistons plongeurs de fermeture étant des pistons à double effet (8) qui subdivisent la chambre à cylindres d'un cylindre de fermeture (6) en une chambre de pression de fermeture (10) et en une chambre de pression d'ouverture (11) et dans lesquels est disposé à chaque fois un passage d'écoulement (23) reliant la chambre de pression de fermeture (10) à la chambre de pression d'ouverture (11), passage dans lequel est montée une vanne de lavage avec laquelle le passage d'écoulement (23) peut être fermé dans la position de service "génération de pression de fermeture" et libéré dans les positions de service "ouverture" et "fermeture", et une partie des pistons plongeurs de fermeture (9) étant couplée à des commandes à broches (12, 13) dont les broches (13) peuvent être commandées par un entraînement rotatif et sont en liaison active avec des entraînements hydrauliques de cylindres de piston, avec le fluide de pression hydraulique desquels les chambres de pression de fermeture (10, 15) peuvent être soumises à une pression, **caractérisé en ce que** la chambre de pression (22) de chaque unité de cylindre de piston (20, 21) actionnable par la commande à broche (12, 13) est directement reliée aux chambres de pression de fermeture (10, 15) par une conduite (33) verrouillable, **en ce que** la vanne de lavage présente un corps de vanne (24) de type piston et **en ce qu'**une vanne pilote (30) permettant de régler la position d'ouverture et de fermeture du corps de vanne (24) et se trouvant en liaison active avec le corps de vanne (24) est prévue.

2. Système de fermeture à deux plateaux selon la revendication 1, **caractérisé en ce que** le corps de vanne (24) est un composant cylindrique logé de façon réversible dans une chambre à piston cylindrique et présentant deux extrémités de type piston parmi lesquelles une extrémité peut être commutée au choix en position d'ouverture et de fermeture par rapport au passage d'écoulement (23) et l'autre extrémité renferme une chambre à vanne (27) dans la chambre à piston cylindrique et est soumise à un ressort de compression (25), un canal d'écoulement(26) reliant les chambres de pression de fermeture (10) à la chambre à vanne(27) cylindrique étant prévu dans le corps de vanne (24), et une conduite de commande (29) étant dérivée de la chambre à vanne (27) cylindrique vers la vanne pilote (30) qui peut être commutée en position de blocage (position 1) ou en position de passage en décompression (position 0).

3. Système de fermeture à deux plateaux selon la revendication 1 ou 2, **caractérisé en ce que** pour la génération de pression du système est prévue une pompe de remplissage (36) avec laquelle du fluide de pression peut être alimenté dans une conduite de pression du système (35 ; 35 a, b) à partir d'un réservoir (32) via un filtre (37) et une vanne à voie unique (38), conduite qui est en liaison avec les chambres de pression d'ouverture (11), un réservoir à bulles (39) et la conduite hydraulique (33) qui va des chambres de pression (22) des unités de cylindre de piston (20, 21) actionnées par broches vers les chambres de pression de fermeture (10, 15).

4. Système de fermeture à deux plateaux selon l'une quelconque des revendications 1 à 3, **caractérisé en ce qu'**une conduite (29) va de la vanne pilote (30) à la cavité (14) à partir de laquelle le fluide de pression R peut être guidé dans le réservoir (32), via la conduite de retour (31), après passage par le filetage de l'écrou de broche (12) et la broche (13).
